# EUROPÄISCHE PATENTANMELDUNG

(11) **EP 4 378 555 A1**
(43) Veröffentlichungstag der Anmeldung: **05.06.2024**
(21) Anmeldenummer: 23195417.3
(22) Anmeldetag: 05.09.2023
(51) Int. Cl.: B01D 19/00, F24D 19/08

(54) **ABSCHEIDER ZUR VERWENDUNG IN EINEM WÄRMEPUMPENSYSTEM**

(30) Priorität: 30.11.2022 DE 102022131725
(71) Anmelder: Stiebel Eltron GmbH & Co. KG, 37603 Holzminden (DE)
(72) Erfinder: SCHAUMLÖFFEL, Michael, 37671 Höxter (DE); SCHRÖDER, Nikolas, 32839 Steinheim (DE); HAUPT, Simon, 31785 Hameln (DE)

(57) **Zusammenfassung**

Die Erfindung betrifft einen Abscheider 121, 221, 300, 400, 500, 700 zur Verwendung in einem Sekundärkreis 120, 220 eines Wärmepumpensystems 100, 200, wobei der Sekundärkreis zur Führung von Wasser ausgestaltet ist, wobei der Abscheider ein Zentrifugalabscheider mit einem tangentialen Eintritt 311, 411, 711 und einem radialen oder tangentialen Austritt 312, 412, 712 ist, durch den Wasser in einem oberen Bereich 310, 410 des Abscheiders tangential in den Abscheider hinein und in einem unteren Bereich 320, 420 des Abscheiders radial oder tangential aus dem Abscheider heraus gelangt, wobei der Abscheider einen Entlüfter 127, 227, 327, 427, 527 umfasst, der ausgestaltet ist, Gas, insbesondere Kältemittel, das in den Abscheider gelangt, abzuführen, wobei der Entlüfter in dem oberen Bereich des Abscheiders von einem Strömungspfad des Wassers beabstandet im Abscheider angeordnet ist. Dies ermöglicht ein effizientes Abführen von Gas, insbesondere Kältemittel, mit einem einfachen Aufbau für den Abscheider.

## Beschreibung

Die Erfindung betrifft einen Abscheider zur Verwendung in einem Wärmepumpensystem, insbesondere zur Verwendung in einem Sekundärkreis eines Wärmepumpensystems, eine Baugruppe mit einem erfindungsgemäßen Abscheider, ein Wärmepumpensystem mit dem erfindungsgemäßen Abscheider und ein Wärmepumpensystem mit der erfindungsgemä-ßen Baugruppe.

In der Regel weisen Wärmepumpensysteme, insbesondere Luft/Wasser, Sole/Wasser oder Wasser/Wasser Wärmepumpen, einen Primärkreis zur Führung eines Kältemittels und einen Sekundärkreis zur Führung von Wasser auf, wobei durch einen Wärmeübertrager Wärme zwischen dem Kältemittel und dem Wasser übertragen werden kann.

Bei Verwendung von einem brennbaren Kältemittel, insbesondere Kohlenwasserstoffen wie C3H8 (R290, Propan) ist jedoch die Problematik erkannt worden, dass durch einen Defekt, z.B. durch einen allgemeinen Defekt oder einen Defekt durch gefrierendes Wasser im Wärmeübertrager, der z.B. als Plattenwärmeübertrager ausgestaltet sein kann, Kältemittel in den Sekundärkreis, insbesondere einen Heizbereich des Sekundärkreises, eintreten kann, welches anschließend über das Verteilsystem des Sekundärkreises in ein Haus, das mit dem Heizbereich geheizt wird, gelangen kann, insbesondere durch einen Austritt durch Automatikentlüfter oder Sicherheitsventile. Bei Verwendung von Propan als Kältemittel, das einem brennbaren Kältemittel entspricht, kann dann zusammen mit einer Raumluft ein zündfähiges Gas-Gemisch entstehen, welches dann eine Gefahr für das Haus darstellt.

Aus dem Stand der Technik ist bekannt, in dem Sekundärkreis eines Wärmepumpensystems ein Sicherheitsventil und einen Automatikentlüfter vorzusehen, um so den Heizbereich im Haus vor brennbarem Kältemittel abzusichern, insbesondere in den Sekundärkreis eintretendes brennbares Kältemittel sicher abzuführen, bevor es im Haus austreten kann. Insbesondere bei Propananwendungen kann auch ein Vorlaufbereich und ein Rücklaufbereich des Sekundärkreises vorgesehen sein. In einigen Fällen wird anstatt des Automatikentlüfters auch ein Mikroblasenabscheider eingesetzt.

Nachteilig am Stand der Technik zeigt sich, dass trotz der verbauten Entlüfter und Sicherheitsventile eine gefährliche Menge, das heißt über 150 g, an brennbarem Kältemittel unbemerkt in den Sekundärkreis, das heißt, den Heizbereich, gelangen kann. Des Weiteren kann durch weitere Sicherheitsventile und offene Automatikentlüfter brennbares Kältemittel direkt in einen Wohnraum eines Hauses gelangen, so dass ein zündfähiges Gasgemisch im Wohnraum entsteht.

Bisher wurde im Stand der Technik auf einen Automatikentlüfter und ein Sicherheitsventil gesetzt, wobei das Sicherheitsventil so ausgeführt ist, dass das Sicherheitsventil im Sekundärkreis vor allen weiteren verbauten Sicherheitsventilen anspricht (ca. 0,5 bar früher).

Abscheider mit Umlenkeinrichtungen und/oder Schwimmern, welche ein Abscheiden des Kältemittels erzielen sollen, sind aus dem Stand der Technik bekannt. Die vorhandenen Lösungsversuche weisen dabei komplexe Aufbauten auf, bei denen keine weiteren Funktionen als eine Abscheidung des Kältemittels integriert ist.

Ein der vorliegenden Erfindung zugrundeliegendes Ziel ist es, einen Abscheider vorzusehen, der eine Reduktion einer Menge von Kältemittel im Sekundärkreis erlaubt und einen einfachen Aufbau aufweist.

Erfindungsgemäß wird nach einem ersten Aspekt ein Abscheider zur Verwendung in einem Sekundärkreis eines Wärmepumpensystems vorgeschlagen, wobei der Sekundärkreis zur Führung von Wasser oder Glycolgemischen ausgestaltet ist, wobei der Abscheider ein Zentrifugal- oder abscheider mit einem etwa tangentialen Eintritt und einem radialen oder tangentialen, bevorzugt radialen, Austritt ist, durch den Wasser in einem oberen Bereich des Abscheiders tangential in den Abscheider hinein und in einem unteren Bereich des Abscheiders radial oder tangential aus dem Abscheider heraus gelangt, wobei der Abscheider einen Entlüfter umfasst, der ausgestaltet ist, Gas, insbesondere Kältemittel, das in den Abscheider gelangt, abzuführen, wobei der Entlüfter in dem oberen Bereich des Abscheiders von einem Strömungspfad des Wassers beabstandet im Abscheider angeordnet ist.

Durch einen Abscheider, der ein Zentrifugalabscheider mit einem tangentialen Eintritt und einem radialen oder tangentialen Austritt ist, durch den Wasser in einem oberen Bereich des Abscheiders tangential in den Abscheider hinein und in einem unteren Bereich des Abscheiders radial oder tangential aus dem Abscheider heraus gelangt, wobei der Abscheider einen Entlüfter umfasst, der ausgestaltet ist, ein Gas, insbesondere ein Kältemittel, das in den Abscheider gelangt, abzuführen, wobei der Entlüfter in dem oberen Bereich des Abscheiders von einem Strömungspfad des Wassers beabstandet im Abscheider angeordnet ist, ist es möglich, das Gas durch den Entlüfter abzuführen, ohne dass auch Wasser durch den Entlüfter entweicht. Dies ermöglicht ein bestmögliches Abführen des Gases, wobei der Abscheider einen einfachen Aufbau aufweist.

Ein radialer Austritt liegt vor, wenn der Austritt, der bevorzugt als zylindrisches Rohr oder Rohrstück ausgestaltet ist, senkrecht zu der Oberfläche des Abscheiders angeordnet ist. Als radial wird auch ein Austritt bezeichnet, der nahezu senkrecht zu der Oberfläche des Abscheiders angeordnet ist, d.h. zum Beispiel, wenn ein Winkel zwischen dem Austritt und der Oberfläche des Abscheiders größer als 80° ist.

Ein tangentialer Eintritt liegt erfindungsgemäß dann vor, wenn der Eintritt, der ebenfalls bevorzugt als zylindrisches Rohr oder Rohrstück ausgestaltet ist, gegenüber einer radialen Anordnung des Eintritts in eine Umfangsrichtung des Abscheiders versetzt ist, ohne dass eine Ausrichtung des Eintritts verändert wird. Somit ist der tangentiale Eintritt gerade nicht senkrecht zu der Oberfläche des Abscheiders angeordnet. Bei größtmöglicher Versetzung des Eintritts gegenüber einer radialen Anordnung ist der Eintritt zu der Oberfläche des Abscheiders derart angeordnet, das eine Achse, die durch den tangentialen Eintritt definiert wird, einen Winkel von 90° zu einer Achse aufweist, die von einem Mittelpunkt des Abscheiders zu dem tangentialen Eintritt führt, d.h. zu einer radialen Richtung. Erfindungsgemäß ist auch ein Eintritt als ein tangentialer Eintritt (oder ein Austritt als ein tangentialer Austritt) zu verstehen, der einen Winkel von weniger als 90°, bevorzugt im Bereich von 60° bis 90°, zu einer radialen Richtung des Abscheiders aufweist.

Wasser, das durch den Zentrifugalabscheider fließt, fließt von dem Eintritt zu dem Austritt durch den Abscheider. Insbesondere kann ein Zentrifugalabscheider mit einem tangentialen Eintritt im oberen Bereich und einem radialen oder tangentialen Austritt im unteren Bereich zu einem spiralförmigen oder helixförmigen Strömungspfad des Wassers durch den Abscheider führen. Der Strömungspfad des Wassers hängt jedoch vom Wasserdruck des Wassers durch den Abscheider ab, so dass ein erfindungsgemäßer Entlüfter unabhängig vom Wasserdruck vom Strömungspfad des Wassers beabstandet ist. Bevorzugt wird durch einen Strömungspfad des Wassers ein Bereich zwischen dem Eintritt und dem Austritt definiert, wobei erfindungsgemäß der Entlüfter beabstandet von dem Bereich zwischen dem Eintritt und dem Austritt angeordnet ist.

Bevorzugt ist der Abscheider fürWärmpumpen vorgesehen, insbesondere Wärmepumpen mit einer Nennleistung bis 17 kW und einer Maximalleistung bis 22 - 25 kW. Alternativ kann der Abscheider auf für Wärmepumpen mit einer Nennleistung größer gleich 10 kW und einer Maximalleistung bis etwa 100 kW vorgesehen sein. Besonders bevorzugt ist der Abscheider für Wärmepumpen mit einer Maximalleistung von 10kW bis 25 kW oder 13 kW bis 35 kW vorgesehen. Insbesondere kann der Abscheider auf einer Senkenseite oder auf einer Quellenseite des Wärmepumpensystems vorgesehen sein.

Der Abscheider kann, zum Beispiel für eine Wärmepumpe mit einer Maximalleistung von 10 kW bis 20 kW, ein Volumen von 0,2 I bis 1,5 I, bevorzugt ca. 0,77 I, aufweisen. Weiter kann ein solcher Abscheider einen Durchmesser von ca. 60 mm bis 120 mm aufweisen, bevorzugt ca. 90 mm, ca. 80 mm oder ca. 70 mm, bevorzugt ca. 68 mm, aufweisen. Zusätzlich kann der Abscheider eine Höhe von 150 bis 350 mm aufweisen, vorteilhaft ca. 190 bis 250 mm oder im Bereich von ca. 210 mm bis 220 mm, bevorzugt 213 mm, aufweisen. Werte, die als Circa-Werte angegeben sind, umfassen insbesondere auch Werte mit einem Fehler von 10 % zu dem angegebenen Wert.

Bevorzugt weist der Abscheider einen Deckel auf, wobei der Entlüfter an bzw. in dem Deckel des Abscheiders angeordnet ist. Dies hat den Vorteil, dass die Menge an Wasser, die durch den Entlüfter austritt, weiter reduziert wird. Der Wasserlauf im Abscheider, zum Beispiel in Form eines Strudels, sorgt insbesondere dafür, dass das Gas in der Mitte gesammelt wird und aufsteigen kann. Es ist also bevorzugt, dass der Entlüfter im oberen Bereich des Abscheiders über einer Mitte des Abscheiders angeordnet ist oder zumindest näher an der Mitte des Abscheiders als an einem Rand des Abscheiders.

In einer vorteilhaften Ausgestaltung des ersten Aspekts der Erfindung weist der Abscheider ein Sicherheitsventil auf, das in dem oberen Bereich des Abscheiders von einem Strömungspfad des Wassers beabstandet im Abscheider angeordnet ist. Das Sicherheitsventil ist ausgestaltet, sich bei einem vordefinierten Druck zu öffnen und Gas, insbesondere Kältemittel, in eine Umgebung abzulassen. Somit kann bei einem schnellen Druckanstieg bis zu einem vordefinierten Druck auch Gas über das Sicherheitsventil abgelassen werden.

In einer weiteren vorteilhaften Ausgestaltung des ersten Aspekts der Erfindung umfasst der Abscheider eine Entleerungsvorrichtung für den Sekundärkreis. Die Entleerungseinrichtung ist an einer tiefsten Stelle des Abscheiders ausgebildet. Somit kann über den Abscheider z.B. im Fall eines Defekts, das Wasser aus dem Sekundärkreis abgelassen werden.

Zusätzlich oder alternativ kann der Abscheider einen Magnetitabscheider umfassen. Somit können durch den erfindungsgemäßen Abscheider auch Partikel aus dem Wasser im Sekundärkreis herausgefiltert werden.

In einerweiteren vorteilhaften Ausgestaltung des ersten Aspekts der Erfindung umfasst der Abscheider einen Druckschalter, der ausgestaltet ist, bei Druckanstieg ein Signal auszugeben. Ein derartiges Signal kann z.B. dazu verwendet werden, Absperreinrichtungen in dem Sekundärkreis abhängig von einem Druckanstieg im Abscheider zu betätigen, insbesondere zu schließen. Zusätzlich oder alternativ kann ein Anschluss für einen Wasserkreis zur Kühlung vorgesehen sein. Beispielsweise kann ein Anschluss des Drucksensors im Abscheider auch als Anschluss für einen Wasserkreis zur Kühlung von Elektronikbaugruppen (z.B. Inverter) genutzt werden.

Zusätzlich oder alternativ kann der erfindungsgemäße Abscheider einen Temperaturfühler umfassen. Weiter zusätzlich oder alternativ kann der Abscheider eine Detektionseinrichtung für ein Kältemittel oder Luft, zum Beispiel einen Füllstandssensor, umfassen.

In einer bevorzugten Ausführungsform umfasst der Abscheider am tangentialen Eintritt einen Steckanschluss für einen Wärmeübertrager, insbesondere einen Plattenwärmeübertrager. Dadurch kann ein einfaches Einbauen, Ausbauen oder Austauschen des Abscheiders in einem Wärmepumpensystem ermöglicht werden.

Weiter ist bevorzugt, dass der Abscheider am radialen oder tangentialen Austritt einen Schlauchanschluss oder einen Steckanschluss umfasst. Mit dem Schlauchanschluss ist vorzugsweise ein üblicher Schlauch des Heizungskreises verbindbar.

In einer bevorzugten Ausführungsform ist der Abscheider aus Kunststoff gefertigt, zumindest besteht der Abscheider zum größten Teil aus Kunststoff. Kunststoff ermöglicht zudem eine einfache Umsetzung von Steckanschlüssen, bedingt geringe Kosten, insbesondere bei großer Stückzahl und beugt Kondensatbildung im Kühlbetrieb vor (verglichen mit metallischem Abscheider)

Weiter kann der Abscheider nach außen isoliert, d.h. thermisch isoliert sein, d.h. der Abscheider umfasst eine Isolierung, beispielsweise aus EPP (expandiertes Polypropylen) / EPS (expandiertes Polystyrol).

Erfindungsgemäß wird noch einem zweiten Aspekt der Erfindung eine Baugruppe mit einem Abscheider nach einer der zuvor beschriebenen Ausführungsformen und wenigstens einem der folgenden Elemente vorgeschlagen: ein Sicherheitsventil, eine Entleerungsvorrichtung, einen Magnetitabscheider, einen Druckschalter oder Drucksensor, einen Kühlungsanschluss, bevorzugt einen Inverterkühlungsanschluss, einen Temperaturfühler, eine Detektionseinrichtung für Kältemittel oder Luft, zum Beispiel einen Füllstandssensor, einen Steckanschluss oder einen Schlauchanschluss für einen Wärmeübertrager und/oder einen weiteren Steckanschluss oder Schlauchanschluss. Der Inverterkühlungsanschluss kann zusätzlich oder alternativ zu einem Druckschalter oder Drucksensor vorgesehen sein. Insbesondere kann ein Inverterkühlungsanschluss einem Anschluss für den Druckschalter oder Drucksensor entsprechen.

Beispielsweise kann der erfindungsgemäße Abscheider bzw. die erfindungsgemäße Baugruppe in einen Sekundärkreis eines Wärmepumpensystems eingebaut sein.

Erfindungsgemäß wird nach einem dritten Aspekt der Erfindung ein Wärmepumpensystem mit einem Primärkreis zur Führung eines Kältemittels, einem Sekundärkreis zur Führung von Wasser und einem Wärmeübertrager zum Übertragen von Wärme zwischen dem Kältemittel und dem Wasser vorgeschlagen, wobei der Sekundärkreis einen Abscheider nach einer der zuvor beschriebenen Ausführungsformen umfasst oder eine Baugruppe der zuvor beschriebenen Ausführungsformen umfasst.

In einer bevorzugten Ausführungsform ist der Abscheider bzw. die Baugruppe innerhalb eines Gehäuses des Primärkreises angeordnet.

Der Sekundärkreis des Wärmepumpensystems kann einen Vorlaufbereich, Heizbereich und einen Rücklaufbereich umfassen, wobei bevorzugt der Abscheider bzw. die Baugruppe in dem Vorlaufbereich des Sekundärkreises vorgesehen ist.

Zusätzlich oder alternativ kann in dem Wärmepumpensystem eine zusätzliche Baugruppe vorgesehen sein, wobei die zusätzliche Baugruppe wenigstens eines der folgenden Elemente umfasst: ein Rückschlagventil, einen oder zwei Schlauchanschlüsse, einen Volumenstromsensor, einen oder zwei Steckanschlüsse, einen Temperatursensor und eine Filterbaugruppe, wobei die zusätzliche Baugruppe in dem Rücklaufbereich vorgesehen ist.

Es kann also eine Baugruppe für den Vorlaufbereich, z.B. in Form der Baugruppe des Abscheiders vorgesehen sein und zusätzlich oder alternativ eine Baugruppe für den Rücklaufbereich des Sekundärkreises.

Insbesondere ist bevorzugt, dass die Bauteile der Baugruppe bzw. der zusätzlichen Baugruppe als Kunststoffbauteile, zu mindestens wo möglich, ausgestaltet sind.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus den obigen Erläuterungen und der folgenden Diskussion zu entnehmen sind.

Im Folgenden wird die vorliegende Erfindung anhand von in den Figuren dargestellten Ausführungsbeispielen weiter illustriert und erläutert. Hierbei zeigen:
- Fig. 1: eine schematische Darstellung zur Illustration eines ersten Ausführungsbeispiels eines Wärmepumpensystems mit dem erfindungsgemäßen Abscheider,
- Fig. 2: eine schematische Darstellung zur Illustration eines zweiten Ausführungsbeispiels eines Wärmepumpensystems mit dem erfindungsgemäßen Abscheider,
- Fig. 3: eine schematische Darstellung zur Illustration des erfindungsgemäßen Abscheiders aus Fig. 1,
- Fig. 4: eine schematische Darstellung zur Illustration des erfindungsgemäßen Abscheiders aus Fig. 2,
- Fig. 5: eine schematische Darstellung zur Illustration eines dritten Ausführungsbeispiels des erfindungsgemäßen Abscheiders,
- Fig. 6: eine schematische Darstellung zur Illustration einer Baugruppe für einen Rücklaufbereich des Sekundärkreises eines Wärmepumpensystems,
- Fig. 7A: eine schematische Darstellung zur Illustration eines Querschnitts eines vierten Ausführungsbeispiels eines zylinderförmigen Abscheiders parallel zu einer Zylinderachse des Abscheiders, und
- Fig. 7B: eine schematische Darstellung zur Illustration eines Querschnitts des vierten Ausführungsbeispiels des zylinderförmigen Abscheiders parallel zu einer Grundfläche des Abscheiders.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

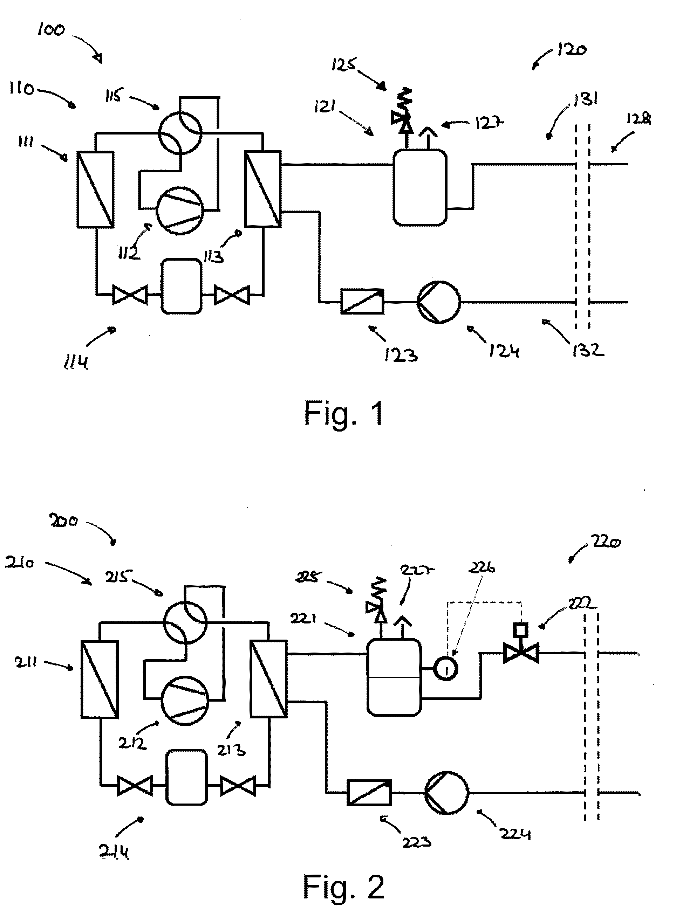

Fig. 1 zeigt eine schematische Darstellung zur Illustration eines ersten Ausführungsbeispiels eines Wärmepumpensystems mit dem erfindungsgemäßen Abscheider.

Das Wärmepumpensystem 100 umfasst einen Primärkreis 110 zur Führung eines Kältemittels und einen Sekundärkreis 120 zur Führung von Wasser.

Der Primärkreis 110 umfasst einen ersten Wärmeübertrager 111, zum Beispiel einen Kältemittel/Luft-Wärmeübertrager in Form eines Verdampfers, einen Verdichter 112, einen Kältemittel/Wasser-Wärmeübertrager 113, zum Beispiel in Form eines Verflüssigers, eine Expansionseinrichtung 114, zum Beispiel in Form eines Drosselorgans optional mit einem selbstregelnden Puffergefäß, und eine Kältekreisumkehreinrichtung 115, zum Beispiel in Form eines 4-2-Wegeventils. Über den Wärmeübertrager 113 ist der Primärkreis 110 mit dem Sekundärkreis 120 thermisch verbunden, wobei der Wärmeübertrager 113 zum Beispiel ein Plattenwärmeüberträger sein kann.

Der Sekundärkreis 120 umfasst im vorliegenden Ausführungsbeispiel einen erfindungsgemäßen Abscheider 121, eine Umwälzpumpe 124 und eine Absperreinrichtung 123. Der Abscheider 121 umfasst ein Sicherheitsventil 125 und einen Entlüfter 127. Das Sicherheitsventil 125 öffnet bei Überschreiten eines vordefinierten Schwellwertdrucks. Der Sekundärkreis 120 umfasst einen Vorlaufbereich 131, einen Heizbereich 128 und einen Rücklaufbereich 132, wobei der Abscheider 121 in dem Vorlaufbereich 131 und wobei die Absperreinrichtung 123 und die Umwälzpumpe 124 in dem Rücklaufbereich 132 angeordnet sind. Alles in der Zeichnung links der als gestrichelte Linie gezeichneten Grenze zu dem Heizbereich 128 befindliche wird in bevorzugten Ausführungen innerhalb eines Gehäuses der Wärmepumpe des Wärmepumpensystems 100 angeordnet werden.

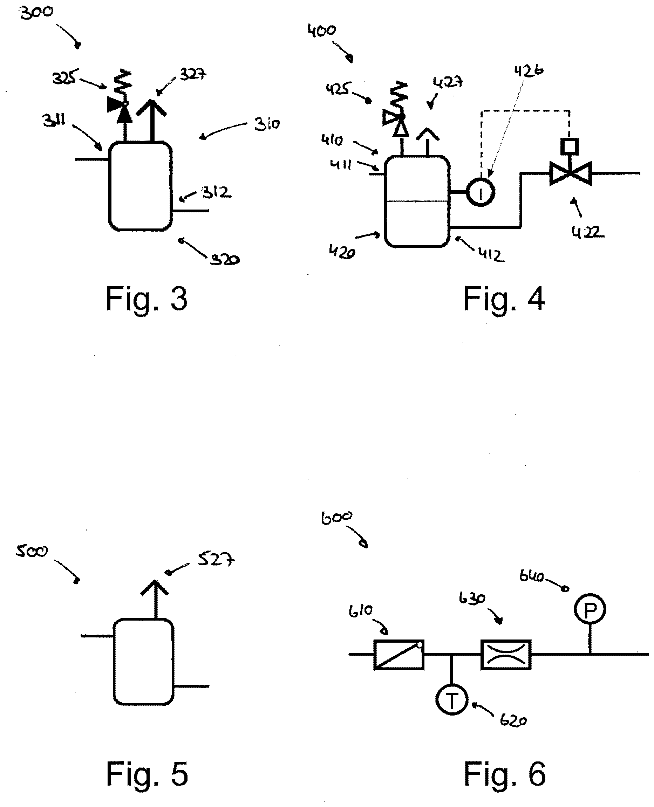

Der Entlüfter 127 ist in einem oberen Bereich des Abscheiders 121 angeordnet und zwar derart, dass der Entlüfter 127 von einem Strömungspfad des Wassers beabstandet ist. Der Entlüfter 127 ist ausgestaltet, ein Kältemittel, das in den Abscheider 121 gelangt, abzuführen. Weitere Ausführungen des Entlüfters 127 bzw. des erfindungsgemäßen Abscheiders, wie er in Fig. 1 gezeigt ist, kann auch der Fig. 3 entnommen werden.

Fig. 2 zeigt eine schematische Darstellung zur Illustration eines zweiten Ausführungsbeispiels eines Wärmepumpensystems mit dem erfindungsgemäßen Abscheider. Das Wärmepumpensystem 200 der Fig. 2 kann bis auf den abgewandelten Abscheider identisch zu dem Wärmepumpensystem 100 ausgeführt sein.

Das Wärmepumpensystem 200 umfasst einen Primärkreis 210 zur Führung eines Kältemittels und einen Sekundärkreis 220 zur Führung von Wasser.

Der Primärkreis 210 umfasst einen ersten Wärmeübertrager 211, beispielsweise einen Kältemittel/Luft Wärmeübertrager, einen Verdichter 212, einen Kältemittel/Wasser-Wärmeübertrager 213, eine Expansionseinrichtung 214 und eine Kältekreisumkehreinrichtung 215. Über den Wärmeübertrager 213 ist der Primärkreis 210 mit dem Sekundärkreis 220 thermisch verbunden, wobei der Wärmeübertrager 213 zum Beispiel ein Plattenwärmeüberträger sein kann.

Der Sekundärkreis 220 umfasst im vorliegenden Ausführungsbeispiel einen Abscheider 221, eine erste Absperreinrichtung 222, eine zweite Absperreinrichtung 223 und eine Umwälzpumpe 224. Die erste Absperreinrichtung 222 ist in diesem Ausführungsbeispiel als elektrisch gesteuertes Ventil, zum Beispiel ein Kolbenventil oder ein Membranventil, ausgestaltet.

Der Abscheider 221 der zweiten Ausführungsform umfasst eine Detektionseinrichtung 226 zur Detektion von Kältemittel oder Luft im Wasserkreislauf, insbesondere dem Abscheider, zum Beispiel einen Füllstandsgrenzgeber, wobei die erste Absperreinrichtung 222 direkt elektrisch mit der Detektionseinrichtung 226, zum Beispiel dem Füllstandsgrenzgeber, verbunden ist.

Das Wärmepumpensystem 200 kann eine Steuerung umfassen, die ausgestaltet ist, über die Detektionseinrichtung 226 ein Kältemittel oder Luft im Wasserkreislauf, insbesondere dem Abscheider, zu detektieren und daraufhin die erste Absperreinrichtung 222, und bevorzugt auch die zweite Absperreinrichtung 223, zu schließen.

Der Abscheider 221 umfasst zudem ein Sicherheitsventil 225, das vorzugsweise als Magnetventil ausgestaltet ist, und auf, das heißt oben an, dem Abscheider 221 vorgesehen ist. Insbesondere kann bevorzugt das Sicherheitsventil 225 im Abscheider 221 bei einem Überdruck im Abscheider 221 öffnen.

Das Wärmepumpensystem 200 kann eine Steuerung umfassen, die ausgestaltet ist, nach Detektion von Kältemittel oder Luft im Wasserkreislauf, insbesondere im Abscheider, die zweite Absperreinrichtung 223, und ggf. auch die erste Absperreinrichtung 222, zu schlie-ßen. Der Abscheider 221 kann zudem ein Ablassventil (nicht gezeigt) umfassen, wobei die Steuerung dann ausgestaltet sein kann, nach der Detektion von Kältemittel und/oder Luft im Wasserkreislauf, das Ablassventil 225 zu öffnen.

Weiter kann das Wärmepumpensystem 200 ein weiteres Ventil (nicht gezeigt) zwischen der ersten Absperreinrichtung 222 und der zweiten Absperreinrichtung 223 aufweisen, das als Sicherheitsüberdruckventil ausgestaltet ist. Im Fall, das bei Kältemitteleintritt die erste Absperreinrichtung 222 und die zweite Absperreinrichtung 223 angesteuert, insbesondere geschlossen, werden, ist der Bereich zwischen der ersten Absperreinrichtung 222 und der zweiten Absperreinrichtung 223 eingesperrt, so dass das weitere Ventil durch den entstehenden Druck öffnet und das austretende Kältemittelgas abbläst.

In der vorliegenden Ausführungsform umfasst der Abscheider 221 zudem einen Entlüfter 227, der ausgestaltet ist, ein Kältemittel, das in den Abscheider 221 gelangt, abzuführen.

Bevorzugt sind das Sicherheitsventil 225 und der Entlüfter in einem oberen Bereich des Abscheiders 221 von einem Strömungspfad des Wassers beabstandet angeordnet. Weitere Merkmale des Abscheiders 221 können auch der Fig. 4 entnommen werden.

Fig. 3 zeigt eine schematische Darstellung zur Illustration des erfindungsgemäßen Abscheiders aus Fig. 1. Der Abscheider 300 ist in Form eines Zylinders ausgeführt, wobei der Abscheider 300 einen von der Seite gesehen oberen Bereich 310 und einen von der Seite gesehen unteren Bereich 320 aufweist. Alternativ kann der Abscheider 300 auch eine nach unten zulaufende Form aufweisen, zum Beispiel in Form eines Trichters. Hierbei kann entweder der genannte Abscheider 300 oder nur der untere Bereich eine zulaufende oder trichterförmige Form aufweisen. Der Austritt kann entweder, ganz allgemein, also nicht nur bezogen auf den Abscheider 300, seitlich von dem Abscheider in einem unteren Bereich des Abscheiders angeordnet sein. Bei dem erfindungsgemäßen Abscheider 300 kann Wasser durch einen Eintritt 311, der am oberen Bereich 310 des Abscheiders 300 angeordnet ist, tangential in den Abscheider 300 eintreten und durch einen Austritt 312, der am unteren Bereich 320 des Abscheiders 300 angeordnet ist, radial oder tangential aus dem Abscheider 300 austreten. Insbesondere wird so ein Bereich durch den Strömungspfad des Wassers in dem Abscheider 300 definiert, von dem ein Entlüfter 327 und ein Sicherheitsventil 325 beabstandet ist.

Das Sicherheitsventil 325 und der Entlüfter 327 sind am oberen Bereich des Abscheiders 300, insbesondere am Deckel des Abscheiders 300, vorgesehen. Bevorzugt ist der Entlüfter 327 und das Sicherheitsventil 325 zu einem Anschluss am Deckel des Abscheiders 300 zusammengeführt.

Fig. 4 zeigt eine schematische Darstellung zur Illustration des erfindungsgemäßen Abscheiders aus Fig. 2. Der Abscheider 400 umfasst einen oberen Bereich 410 und einen unteren Bereich 420. Im oberen Bereich 410 ist ein Eintritt 411 tangential angeordnet und im unteren Bereich 420 ein Austritt radial oder tangential. Der obere Bereich 410 und der untere Bereich 420 können jeweils einem oberen Teil des Zylinders und einem unteren Teil des Zylinders entsprechen, die jeweils einer Hälfte des Zylinders entsprechen. Zusätzlich oder alternativ kann auch der Abscheider 400 eine trichterförmige Form aufweisen, wobei beispielsweise der obere Bereich 410 einem zylinderförmigen Bereich und der untere Bereich 420 einem trichterförmigen Bereich entsprechen kann. Weitere Alternativen für die Form des Abscheiders sind denkbar und im Stand der Technik bekannt.

Der Abscheider 400 umfasst ein Sicherheitsventil 425 und einen Entlüfter 427 sowie eine Detektionseinrichtung 426. Die Detektionseinrichtung 426 ist mit einer ersten Absperrvorrichtung 422 elektronisch verbunden, um bei Detektion von Kältemittel oder Luft im Wasserkreislauf, insbesondere dem Abscheider, zumindest die erste Absperrvorrichtung 422 zu schließen. Die Detektionseinrichtung 426 kann direkt in dem Abscheider 400 oder in einem Bauteil einer Baugruppe, zu der der Abscheider 400 erfindungsgemäß gehören kann, angebracht werden. Beispielsweise kann die Detektionseinrichtung 426 in einem seitlichen Rohr zu dem Abscheider 400 angebracht sein. Insbesondere ist bevorzugt, dass der Abscheider 400 bzw. die Baugruppe, zu der der Abscheider 400 gehören kann, aus Kunststoff, zumindest zum größten Teil aus Kunststoff, ist.

Fig. 5 zeigt eine schematische Darstellung zur Illustration eines dritten Ausführungsbeispiels des erfindungsgemäßen Abscheiders. Der Abscheider 500 ist als Zentrifugalabscheider ausgestaltet und umfasst einen Entlüfter 527, der von einem Strömungspfad des Wassers beabstandet im Abscheider 500 angeordnet ist.

Der erfindungsgemäße Abscheider 300, 400, 500 ist bevorzugt in einem Gehäuse des Primärkreises angeordnet. Weiter bevorzugt kann der Abscheider 300, 400, 500 eine thermische Isolierung aufweisen.

Der Abscheider, wie er zum Beispiel als Abscheider 300, 400, 500 gezeigt ist, kann als ein Teil einer Baugruppe verwirklicht sein, wobei insbesondere vorgesehen ist, dass eine Baugruppe für einen Vorlaufbereich des Sekundärkreises und eine Baugruppe für den Rücklaufbereich für den Sekundärkreises vorgesehen sein kann, wobei der Abscheider 300, 400, 500 im Vorlaufbereich des Sekundärkreises angeordnet ist.

Es ist außerdem bevorzugt, dass eine Baugruppe mit einem Abscheider 300, 400, 500 wenigstens eines der folgenden Elemente umfasst: ein Sicherheitsventil, eine Entleerungsvorrichtung, einen Magnetitabscheider, einen Druckschalter oder Drucksensor, einen Temperaturfühler, eine Detektionseinrichtung für Kältemittel oder Luft, zum Beispiel einen Füllstandssensor, einen oder zwei Steckanschlüsse für einen Wärmeübertrager und einen oder zwei Schlauchanschlüsse.

Zusätzlich oder alternativ zu einer Baugruppe im Vorlaufbereich des Sekundärkreises kann eine weitere Baugruppe für den Rücklaufbereich des Sekundärkreises vorgesehen sein.

Fig. 6 zeigt eine schematische Darstellung zur Illustration einer Baugruppe für einen Rücklaufbereich des Sekundärkreises eines Wärmepumpensystems.

In der zusätzlichen Baugruppe 600 für den Rücklaufbereich können mehrere Komponenten zusammengefasst werden. Eine Auswahl ist beispielhaft in Fig. 6 dargestellt, wobei die gezeigte Ausführungsform der zusätzlichen Baugruppe 600 für den Rücklaufbereich ein Rückschlagventil 610, einen Temperatursensor 620, einen Volumenstromsensor 630 und einen Drucksensor 640 umfasst. Zusätzlich oder alternativ können ein oder zwei Schlauchanschlüsse, ein oder zwei Steckanschlüsse, zum Beispiel für einen Handwerkeranschluss, und/oder eine Filterbaugruppe in der zusätzlichen Baugruppe 600 für den Rücklaufbereich vorgesehen sein.

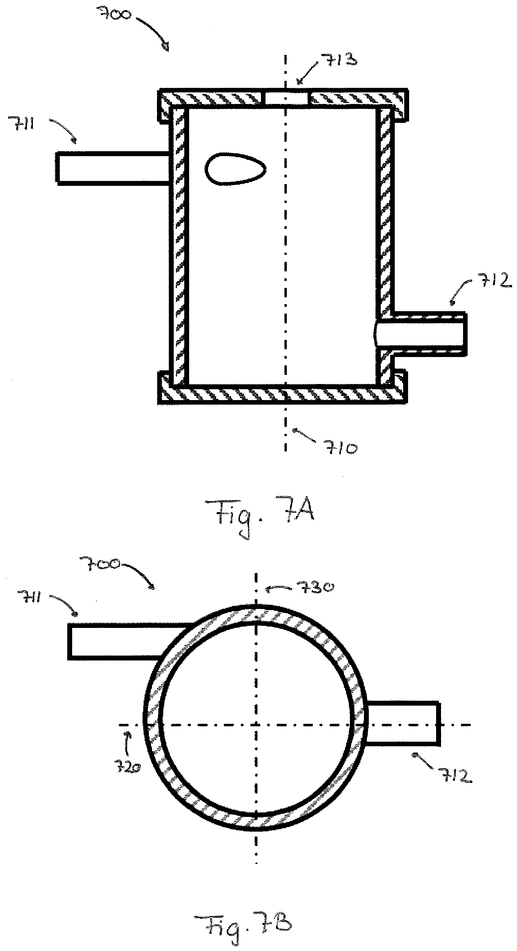

Fig. 7A zeigt eine schematische Darstellung zur Illustration eines Querschnitts eines vierten Ausführungsbeispiels eines zylinderförmigen Abscheiders 700 parallel zu einer Zylinderachse 710 des Abscheiders 700. Der Abscheider 700 ist zylinderförmig und umfasst einen tangentialen Eintritt 711, der tangential zu der Zylindermantelfläche des Abscheiders 700 angeordnet ist und einen radialen Austritt 712, der radial zu der Zylindermantelfläche des Abscheiders 700 angeordnet ist. Eine tangentiale oder radiale Anordnung schließt eine nahezu tangentiale oder nahezu radiale Anordnung mit ein. Der Abscheider 700 umfasst zudem eine Öffnung 713 am oberen Bereich des Abscheiders 700, die zur Verbindung mit dem Entlüfter vorgesehen ist. Die Öffnung 713, die bevorzugt kreisförmig ausgebildet ist, ist mittig in Bezug auf die Zylindergrundfläche des Abscheiders 700 angeordnet, d.h. achsensymmetrisch zur Achse 710.

Fig. 7B zeigt eine schematische Darstellung zur Illustration eines Querschnitts des vierten Ausführungsbeispiels des zylinderförmigen Abscheiders 700 parallel zu einer Grundfläche des Abscheiders 700. Die Darstellung zeigt den Abscheider 700 von oben in Bezug auf eine Anordnung des Abscheiders 700. In dieser Darstellung ist der tangentiale Eintritt 711 des Abscheiders 700 versetzt angeordnet gegenüber einer Mitte des Abscheiders 700. Insbesondere können durch die Grundfläche des Zylinders, der durch den Abscheider 700 definiert wird, zwei senkrecht zueinander und zu der Längsachse des Zylinders angeordnete Achsen 720, 730 definiert werden, wobei der radiale Austritt 711 auf der Achse 720 liegt und der tangentiale Eintritt 711 zu derselben Achse 720 parallel versetzt angeordnet ist. Der radiale Austritt 711 kann bei einer beliebigen Höhe des Abscheiders angeordnet sein. Alternativ zu dem radialen Austritt 711 in der gezeigten Ausführungsform kann der radiale Austritt auch versetzt zu der Achse 720 angeordnet sein. Außerdem kann der Austritt auch tangential angeordnet sein. Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind. Insbesondere können einander entsprechende Einheiten oder Merkmalskomplexe aus unterschiedlichen Ausführungsbeispielen miteinander ausgetauscht werden.

Es folgen einige weitere Überlegungen zu der Erfindung.

Bei der Entwicklung einer neuen Luft-Wasser-Wärmepumpe mit R290, d.h. Propan, als Kältemittel wurde die Problematik erkannt, dass durch einen Defekt (zum Beispiel einem allgemeinen Defekt oder einem Defekt durch gefrierendes Wasser) am Wärmeübertrager, der zum Beispiel ein Plattenwärmeübertrager sein kann, Kältemittel in den Sekundärkreis, d.h. den Heizkreis der Wärmepumpe, eintreten kann, welches anschließend über das Verteilsystem in ein Haus gelangen kann.

Die Aufgabe der aktuellen Erfindung liegt darin, die Menge an brennbarem Kältemittel, welche in das Verteilsystem des Hauses eintritt, auf eine unkritische Menge durch Abscheidung aus dem Wasser zu reduzieren. Hierbei soll die Abscheidung in Form einer kostengünstigen Lösung umgesetzt werden.

Um zu verhindern, dass Kältemittel im Fall einer internen Leckage im Kältemittel/Wasser-Wärmeübertrager über den Wasserkreislauf ins Wohngebäude gelangt, wird eine Abscheideeinrichtung in Form eines Zentrifugalabscheiders, insbesondere als Kunststoffbaugruppe, umgesetzt.

Ein wesentlicher Kern der Erfindung liegt darin, dass die Abscheideeinrichtung in Form eines Zentrifugalabscheiders ausgeführt ist.

Die Baugruppe kann in Form eines Kunststoffbauteils erstellt werden und weitere Funktionen (Temperaturfühler, Detektionseinrichtung für ein Kältemittel, zum Beispiel einen Füllstandsanzeiger, Schnellverbinder, etc.), welche nicht Teil des reinen Abscheiders sind, in einer Baugruppe vereint werden.

Dadurch wird sicher verhindert, dass brennbares Kältemittel ins Wohngebäude gelangt.

Bevorzugt wird der Abscheider in Form einer einfachen Kunststoffbaugruppe umgesetzt. Weiter können in einer vorteilhaften Ausgestaltung verschiedene Komponenten in der erfindungsgemäßen Baugruppe vereint werden. Besonders bevorzugt werden Anschlussbereiche, zum Beispiel ein Steckanschluss für einen Plattenwärmeübertrager, ein Schlauchanschluss am Abscheideraustritt, ein Steckanschluss für den Wärmeübertrager oder für Handwerker etc., d.h. eine einfache Anschlusstechnik, vorgesehen. So kann eine schnelle Montage, insbesondere von dem Abscheider, gewährleistet werden.

Durch die Ausführung aus Kunststoff kann zudem eine leichte und kostengünstige Baugruppe bereitgestellt werden.

Anwendung kann die neue Technik bei allen Wärmepumpenentwicklungen finden, welche brennbare Kältemittel zum Betrieb des Kältekreises verwenden.

Die erfindungsgemäße Abscheiderbaugruppe hat eine oder mehrere der folgenden Eigenschaften: Der Abscheider ist als Zentrifugalabscheider realisiert, d.h. der Abscheider hat einen tangentialen Eintritt und einen radialen oder tangentialen Austritt. Bevorzugt weist der Abscheider keine Einbauten zwischen Ein- und Ausströmung auf. Die Baugruppe kann insbesondere als Kunststoffbaugruppe ausgeführt sein. Der Entlüfter ist bevorzugt in einem Abscheiderdeckel vorgesehen, so dass der Entlüfter optional tauschbar ist, ohne Heizungswasser abzulassen. Zusätzlich kann ein Sicherheitsventil vorgesehen sein, wobei das Sicherheitsventil dann bevorzugt in einem Abscheiderdeckel vorgesehen ist. Beispielsweise kann der Anschluss des Entlüfters mit einem Anschluss eines Sicherheitsventils kombiniert sein. Zusätzlich oder alternativ kann im Abscheider, insbesondere am Entlüfter, ein Sperrventil vorgesehen sein, das den Wasserkreislauf verschließt und ein Austauschen des Entlüfters ohne Ablassen des Wassers im Wasserkreislauf ermöglicht.

Weiter kann in der Baugruppe eine Entleerungsvorrichtung integriert sein. Zusätzlich oder alternativ kann auch ein Magnetitabscheider integriert sein.

Zudem kann in der Baugruppe ein Druckschalter oder Drucksensor integriert sein, wobei der Druckschalter bevorzugt in einem Heizbereich des Sekundärkreises vorgesehen ist. Außerdem kann in der Baugruppe ein Temperaturfühler integriert sein, wobei der Temperaturfühler bevorzugt in einem Vorlaufbereich des Sekundärkreises vorgesehen ist.

Weiter umfasst die Baugruppe, insbesondere der Abscheider einen Steckanschluss für einen Wärmeübertrager, zum Beispiel in Form eines Plattenwärmeübertragers, am Eintritt des Abscheiders und/oder einen Schlauchanschluss am Austritt des Abscheiders.

Bevorzugt umfasst die Baugruppe eine thermische Isolierung, zum Beispiel EPP (expandiertes Polypropylen) / EPS (expandiertes Polystyrol) bzw. kann als umschäumte Baugruppe verstanden werden.

Zusätzlich kann neben der Abscheiderbaugruppe, d.h. der Baugruppe, die den erfindungsgemäßen Abscheider umfasst, eine zusätzliche Baugruppe für den Rücklauf mit einem oder mehreren derfolgenden Elemente umgesetzt werden: einem Rückschlagventil, einem oder zwei Schlauchanschlüssen, einem Volumenstromsensor, einem oder zwei Steckanschlüssen für den Wärmeübertrager und/oder als Handwerkeranschluss, ggf. einem Temperatursensor, zum Beispiel falls nicht ein Temperatursensor in einem Volumenstromsensor integriert ist, und optional eine integrierte Filterbaugruppe.

Der Abscheider kann in Form eines Zylinders ausgeführt sein. Der Eintritt erfolgt tangential am oberen Ende des Abscheiders. Der Austritt erfolgt radial oder tangential am unteren Ende des Abscheiders. Der Entlüfter und das Sicherheitsventil sind bevorzugt am oberen Deckel des Abscheiders angeordnet. Eine Zusammenführung des Entlüfters und des Sicherheitsventils zu einem Anschluss am Deckel ist anzustreben. Als Erweiterung kann zusätzlich eine Detektionseinrichtung für Kältemittel oder Luft, zum Beispiel eine Füllstandssensorik, in den Abscheider integriert werden. Die Sensorik kann direkt in den Abscheider oder in eine zusätzliche Sidetube, welche in der Kunststoffbaugruppe integriert ist, eingebracht werden. Als Erweiterung kann der Abscheider auch ohne Sicherheitsventil ausgeführt werden.

In der zusätzlichen Baugruppe im Rücklauf können mehrere Komponenten zusammengefasst werden.

Die Erfindung betrifft einen Abscheider zur Verwendung in einem Sekundärkreis eines Wärmepumpensystems, wobei der Sekundärkreis zur Führung von Wasser ausgestaltet ist, wobei der Abscheider ein Zentrifugalabscheider mit einem tangentialen Eintritt und einem radialen oder tangentialen Austritt ist, durch den Wasser in einem oberen Bereich des Abscheiders tangential in den Abscheider hinein und in einem unteren Bereich des Abscheiders radial oder tangential aus dem Abscheider heraus gelangt, wobei der Abscheider einen Entlüfter umfasst, der ausgestaltet ist, Gas, insbesondere Kältemittel, das in den Abscheider gelangt, abzuführen, wobei der Entlüfter in dem oberen Bereich des Abscheiders von einem Strömungspfad des Wassers beabstandet im Abscheider angeordnet ist. Dies ermöglicht ein effizientes Abführen von Gas, insbesondere Kältemittel, mit einem einfachen Aufbau für den Abscheider.

## Patentansprüche

1. Abscheider (121, 221, 300, 400, 500, 700) zur Verwendung in einem Sekundärkreis (120, 220) eines Wärmepumpensystems (100, 200), wobei der Sekundärkreis (120, 220) zur Führung von Wasser ausgestaltet ist,
wobei der Abscheider (121, 221, 300, 400, 500, 700) ein Zentrifugalabscheider mit einem tangentialen Eintritt (311, 411, 711) und einem radialen oder tangentialen Austritt (312, 412, 712) ist, durch den Wasser in einem oberen Bereich (310, 410) des Abscheiders (121, 221, 300, 400, 500, 700) tangential in den Abscheider (121, 221, 300, 400, 500, 700) hinein und in einem unteren Bereich (320, 420) des Abscheiders (121, 221, 300, 400, 500, 700) radial oder tangential aus dem Abscheider (121, 221, 300, 400, 500, 700) heraus gelangt,
wobei der Abscheider (121, 221, 300, 400, 500, 700) einen Entlüfter (127, 227, 327, 427, 527) umfasst, der ausgestaltet ist, Gas, insbesondere Kältemittel, das in den Abscheider (121, 221, 300, 400, 500) gelangt, abzuführen,
wobei der Entlüfter (127, 227, 327, 427, 527) in dem oberen Bereich (310, 410) des Abscheiders (121, 221, 300, 400, 500) von einem Strömungspfad des Wassers beabstandet im Abscheider (121, 221, 300, 400, 500, 700) angeordnet ist.

2. Abscheider (121, 221, 300, 400, 500, 700) nach Anspruch 1, wobei der Strömungspfad des Wassers einen Bereich zwischen dem Eintritt (311, 411, 711) und dem Austritt (312, 412, 712) definiert, wobei der Entlüfter (127, 227, 327, 427, 527) von dem Bereich zwischen dem Eintritt (311, 411, 711) und dem Austritt (312, 412, 712) beabstandet in dem Abscheider angeordnet ist.

3. Abscheider (121, 221, 300, 400, 500, 700) nach einem der Ansprüche 1 und 2, wobei der Abscheider (121, 221, 300, 400, 500, 700) einen Deckel aufweist und wobei der Entlüfter (127, 227, 327, 427, 527) an dem Deckel des Abscheiders (121, 221, 300, 400, 500, 700) angeordnet ist.

4. Abscheider (121, 221, 300, 400, 500, 700) nach einem der vorherigen Ansprüche, wobei der Abscheider (121, 221, 300, 400, 500, 700) ein Sicherheitsventil (125, 225, 325, 425) aufweist, das in dem oberen Bereich (310, 410) des Abscheiders (121, 221, 300, 400, 500, 700) von dem Strömungspfad des Wassers beabstandet im Abscheider (121, 221, 300, 400, 500, 700) angeordnet ist.

5. Abscheider (121, 221, 300, 400, 500, 700) nach einem der vorherigen Ansprüche, wobei der Abscheider (121, 221, 300, 400, 500, 700) eine Entleerungsvorrichtung für den Sekundärkreis (120, 220) umfasst, wobei die Entleerungsvorrichtung an einer tiefsten Stelle des Abscheiders (121, 221, 300, 400, 500, 700) ausgebildet ist.

6. Abscheider (121, 221, 300, 400, 500, 700) nach einem der vorherigen Ansprüche, wobei der Abscheider (121, 221, 300, 400, 500, 700) einen Magnetitabscheider umfasst.

7. Abscheider (121, 221, 300, 400, 500, 700) nach einem der vorherigen Ansprüche, wobei der Abscheider (121, 221, 300, 400, 500, 700) einen Druckschalter umfasst, der ausgestaltet ist, bei Druckanstieg ein Signal auszugeben.

8. Abscheider (121, 221, 300, 400, 500, 700) nach einem der vorherigen Ansprüche, wobei der Abscheider (121, 221, 300, 400, 500, 700) einen Temperaturfühler umfasst.

9. Abscheider (121, 221, 300, 400, 500, 700) nach einem der vorherigen Ansprüche, wobei der Abscheider (121, 221, 300, 400, 500, 700) eine Detektionseinrichtung für Kältemittel oder Luft, zum Beispiel einen Füllstandssensor oder-schalter, umfasst.

10. Abscheider (121, 221, 300, 400, 500, 700) nach einem der vorherigen Ansprüche, wobei der Abscheider (121, 221, 300, 400, 500, 700) am tangentialen Eintritt (311, 411, 711) einen Steckanschluss und/oder einen Schlauchanschluss für einen Wärmeübertrager (113, 223), insbesondere einen Plattenwärmeübertrager, umfasst.

11. Abscheider (121, 221, 300, 400, 500, 700) nach einem der vorherigen Ansprüche, wobei der Abscheider (121, 221, 300, 400, 500, 700) am radialen oder tangentialen Austritt (312, 412, 712) einen Steckanschluss und/oder einen Schlauchanschluss umfasst.

12. Abscheider (121, 221, 300, 400, 500, 700) nach einem der vorherigen Ansprüche, wobei der Abscheider (121, 221, 300, 400, 500, 700) zum größten Teil aus Kunststoff besteht.

13. Abscheider (121, 221, 300, 400, 500, 700) nach einem der vorherigen Ansprüche, wobei der Abscheider (121, 221, 300, 400, 500, 700) nach außen thermisch isoliert ist.

14. Baugruppe mit einem Abscheider (121, 221, 300, 400, 500, 700) nach einem der Ansprüche 1 bis 13 und wenigstens einem der folgenden Elemente: ein Sicherheitsventil, eine Entleerungsvorrichtung, einen Magnetitabscheider, einen Druckschalter oder Drucksensor, einen Kühlungsanschluss, bevorzugt einen Inverterkühlungsanschluss, einen Temperaturfühler, eine Detektionseinrichtung für Kältemittel oder Luft, zum Beispiel einen Füllstandssensor, einen oder zwei Steckanschlüsse insbesondere für einen Wärmeübertrager und/oder einen oder zwei Schlauchanschlüsse.

15. Wärmepumpensystem (100, 200) mit einem Primärkreis (110, 210) zur Führung eines Kältemittels, einem Sekundärkreis (120, 220) zur Führung von Wasser und einem Wärmeübertrager (113, 213) zum Übertragen von Wärme zwischen dem Kältemittel und dem Wasser, wobei der Sekundärkreis (120, 220) einen Abscheider (121, 221, 300, 400, 500, 700) nach einem der Ansprüche 1 bis 13 umfasst.

16. Wärmepumpensystem (100, 200) nach Anspruch 15, wobei der Abscheider (121, 221, 300, 400, 500, 700) innerhalb eines Gehäuses des Primärkreises (110, 210) angeordnet ist.

17. Wärmepumpensystem (100, 200) nach einem der Ansprüche 15 und 16, wobei der Sekundärkreis (120, 220) einen Vorlaufbereich (131), einen Heizbereich (128) und einen Rücklaufbereich (132) umfasst, wobei der Abscheider (121, 221, 300, 400, 500, 700) in dem Vorlaufbereich (131) vorgesehen ist.

18. Wärmepumpensystem (100, 200) nach Anspruch 17, wobei eine zusätzliche Baugruppe (600) vorgesehen ist, wobei die zusätzliche Baugruppe (600) wenigstens eines der folgenden Elemente umfasst: ein Rückschlagventil (610), einen Schlauchanschluss, einen Volumenstromsensor (630), einen Steckanschluss, einen Temperatursensor (620), einen Drucksensor (640) oder Druckschalter und eine Filterbaugruppe, wobei die zusätzliche Baugruppe (600) in dem Rücklaufbereich (132) vorgesehen ist.
